# EUROPÄISCHE PATENTSCHRIFT

(11) **EP 1 256 242 B1**
(45) Veröffentlichungstag und Bekanntmachung des Hinweises auf die Patenterteilung: **23.07.2014**
(21) Anmeldenummer: 01913637.3
(22) Anmeldetag: 14.02.2001
(51) Int. Cl.: H04W 28/06

(54) **VERFAHREN ZUM ÜBERTRAGEN VON PAKETDATENINFORMATIONEN IN EINEM FUNK-KOMMUNIKATIONSSYSTEM**
METHOD FOR TRANSMITTING PACKET DATA INFORMATION IN A RADIO COMMUNICATION SYSTEM
PROCEDE DE TRANSMISSION D'INFORMATIONS DE DONNEES PAR PAQUETS DANS UN SYSTEME DE COMMUNICATION RADIO

(30) Priorität: 18.02.2000 DE 10007602
(43) Veröffentlichungstag der Anmeldung: 13.11.2002
(73) Patentinhaber: Siemens Aktiengesellschaft, 80333 München (DE)
(72) Erfinder: GRUHN, Thomas, 12169 Berlin (DE); MECKLENBRÄUKER, Christoph, 1220 Wien (AT); RAJI, Fariba, 1200 Wien (AT); WEGNER, Frank, 13407 Berlin (DE)
(86) Internationale Anmeldenummer: PCT/DE2001/000561
(87) Internationale Veröffentlichungsnummer: WO 2001/062021

(56) Entgegenhaltungen:
- EP-A- 0 726 685
- WO-A-00/05911
- WO-A-01/41349
- US-A- 5 818 826
- AIKAWA S ET AL: "1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, Bd. 1, 23. Juni 1996 (1996-06-23), Seiten 454-458, XP000625714 ISBN: 0-7803-3251-2
- BAKHTIYARI S ET AL: "PRACTICAL IMPLEMENTATION OF A MOBILE DATA LINK PROTOCOL WITH A TYPE II HYBRID ARQ SCHEME AND CODE COMBINING" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, Bd. CONF. 43, 18. Mai 1993 (1993-05-18), Seiten 774-777, XP000393297 ISBN: 0-7803-1267-8

## Beschreibung

Die Erfindung betrifft ein Verfahren zum Übertragen von Paketdaten in einem Funk-Kommunikationssystem gemäß den oberbegrifflichen Merkmalen des Patentanspruchs 1 und ein Funk-Kommunikationssystem, insbesondere Mobilfunksystem, zum Durchführen des Verfahrens.

In einem Funk-Kommunikationssystem werden Nachrichten und Daten, wie beispielsweise Sprache, Bildinformationen oder andere Daten, mittels elektromagnetischer Wellen über eine Funkschnittstelle übertragen. Das Abstrahlen der elektromagnetischen Wellen erfolgt dabei mit Trägerfrequenzen, die in dem für das jeweilige System vorgesehenen Frequenzband liegen. Über eine Funkschnittstelle wird eine Verbindung zwischen mindestens einer Basisstation und mehreren Teilnehmerstationen, die mobile oder ortsfeste Funkgeräte sein können und die untersten Glieder des Systems sind, hergestellt. Eine Basisstation versorgt eine bis zu mehrere quadratkilometergroße Fläche, eine sogenannte Funkzelle, mit dem Funknetz. Durch die hiermit erreichbare räumliche Begrenzung einer Funkzone lassen sich die knappen Trägerfrequenzen in einer gewissen Entfernung zur gleichen Zeit wiederverwenden, ohne daß sich die Kanäle gegenseitig stören. Mehrere Funkzellen bilden hierfür ein gemeinsam von einer Basiskontrollstation verwaltetes Cluster. Mehrere Basiskontrollstationen wiederum sind über eine Mobilvermittlungseinrichtung verbunden, über die der Zugang zum Festnetz oder weiteren Mobilfunksystemen erfolgt.

Um den Bedarf des zur Verfügung stehenden Spektrums an der knappen Ressource "Trägerfrequenz" besser zu decken, wurden synchrone Multiplexverfahren auf der Basis eines frequenz-, zeit- und/oder spreizcodeselektiven Vielfachzugriffs zur Verteilung der Übertragungskapazität eines Kanals auf mehrere Verbindungen eingeführt. Hierzu wird in Absprache zwischen Sender und Empfänger unter Einbeziehung eventueller Vermittlungsknoten ein vorgegebenes Raster aus sende- und empfangssynchronen Frequenzbändern, Zeitschlitzen und/oder Codesequenzen genutzt. Die Sender ordnen die Daten der einzelnen Verbindungen diesem Raster zu und die Empfänger separieren aus dem empfangenen Datenstrom die für sie bestimmten Daten.

Ein weiteres grundsätzliches Verfahren ist die Paketvermittlung. Sie beruht auf der gemeinsamen Nutzung eines Übertragungskanals mit hoher Übertragungskapazität durch mehrere verschiedene Verbindungen. Auch hierfür wird der Übertragungskanal auf der Zeitachse unterteilt, allerdings nicht in feste Zeitschlitze, sondern in adressierte Datenpakete variabler Länge, wobei durch zusätzliche Trennung in Code oder Frequenz auch mehrere Pakete gleichzeitig gesendet werden können. Die Daten werden zeitvariant übertragen, weshalb man auch von einem asynchronen Multiplex-Verfahren sprechen kann. Jeder Sender kann jederzeit auf die bis dahin ungenutzte Übertragungskapazität zugreifen und seine Daten z.B. nach dem ALOHA-Verfahren, einem stochastischem Zugriffsverfahren, übertragen. Außerdem läßt sich die Datenrate einer Verbindung sehr flexibel variieren. Der Sender kann die Datenrate sowohl dadurch beeinflussen, in welchen zeitlichen Abständen er die Datenpakete sendet, als auch durch deren Länge, Anzahl der verwendeten Codes oder Frequenzen.

Zukünftige Mobilfunksysteme wie das UMTS (Universal Mobile Telecommunications System) werden den Netzteilnehmern eine Vielzahl unterschiedlicher Dienste mit unterschiedlichen Bitraten anbieten. Neben der reinen Sprachübertragung werden Multimedia-Anwendungen mit der einhergehenden Dienstevielfalt einen großen Teil am Datenaufkommen ausmachen. Die zeitvariante Paketdatenübertragung auf der Funkschnittstelle, welche einen sehr flexiblen Zugriff im Zeitschlitzraster bzw. Coderaster erlaubt, das von der synchronen Zeitmultiplex-Komponente von UMTS vorgeben wird, ist hier besonders vielversprechend. Dabei dürfen sendewillige Stationen beim Senden in Aufwärtsrichtung (uplink) nach dem sogenannten "Slottet ALOHA"-Verfahren zu bestimmten synchronen Zeitpunkten anfangen zu senden. In Abwärtsrichtung (downlink) übernimmt die Verteilung der Ressourcen die Basisstation.

Große Datenpakete lassen sich nicht in einem Stück übertragen. Deshalb werden sie vor der eigentlichen Übertragung nochmals in kleine Dateneinheiten, sogenannte PDUs (PDU = Protocol Data Unit) unterteilt. Jede PDU enthält Nutzdaten und wird -in der Regel- mit einem Paketkopf bzw. Header versehen, der die zugehörende Empfänger- und Absenderadresse, die Laufnummer der PDU und ggf. weitere für den Transport der PDU erforderliche Angaben enthält. Bei Paketen im MobilfunkBereich steht dabei typischerweise nicht immer in jedem Header die Empfänger- und Absenderadresse. Die Laufnummer bzw. Sequenznummer ist eine Identifizierungsnummer zur direkten Kennzeichnung einer bestimmten PDU. Am Ende der Nutzdaten ist zum Erkennen von Fehlern, die auf der Übertragungsstrecke entstehen, eine Prüfsumme hinzugefügt, die mittels eines fehlererkennenden Codes (CRC = zyklischer Redundanzcheck-Code) über die Nutzdatenbit berechnet wird. Bekannte Header und CRC haben eine konstante Länge. Bei UMTS haben RLC-PDUs einen Header, der -signalisiert durch einen Merker (Flag)- um eine Kopfabschnitterweiterung (Header Extension) verlängert werden kann. Ist die Länge der PDUs konstant, ist mit dem PDU-Anfang zugleich das PDU-Ende festgelegt. Ist die PDU-Länge hingegen variabel, wird die PDU-Länge explizit im Header angegeben oder das PDU-Ende wird genau wie der PDU-Anfang auf einer Sicherungsschicht durch eine zusätzliche Markierung (Flag) gekennzeichnet.

Die gesamte PDU, bestehend aus Header, Nutzdaten und CRC, wird vor der Übertragung zur Erhöhung des Fehlerschutzes auf der Übertragungsstrecke zusätzlich kanalcodiert. Durch verschiedene Codieralgorithmen wird mehr Redundanz in das System eingebracht. Ein zusätzlicher Fehlerschutz gegen Pegeleinbrüche wird außerdem durch Bitverwürfelung (Interleaving) erreicht. Hierbei wird die bereits kanalcodierte PDU, die sogenannte CPDU (Coded Protocol Data Unit), entweder zeitlich aufeinanderfolgend, gleichzeitig oder teilweise gleichzeitig und aufeinanderfolgend verteilt. Danach werden die CPDUs über die Funkstrecke übertragen. Die oben genannten Bestandteile einer PDU sind dabei jeweils durch Fehlerschutzcodierung und -verfahren über alle CPDUs verteilt.

Der Mobilfunkkanal ist einer der ungünstigsten Übertragungskanäle, die in der Nachrichtentechnik vorkommen. Ein Problem sind kurzfristige Empfangspegeleinbrüche und Signalverzerrungen, die hauptsächlich durch eine Mehrwegausbreitung (Fast Fading) der an Hindernissen reflektierten bzw. gebeugten Funkwellen auf der Übertragungsstrecke hervorgerufen werden. Das Sendesignal erreicht den Empfänger zeitlich versetzt auf unterschiedlich langen Wegen, was am Empfänger je nach Phasenlage der Signale zu Auslöschungen oder Verstärkungen (Interferenzen) führt. Im Falle der Übertragung der o.g. Datenstrukturen kann es hierdurch nicht nur zum Verlust von Daten, sondern mit gleicher Wahrscheinlichkeit auch zum Verlust des Headers kommen. Dadurch läßt sich eine PDU nicht mehr einer Verbindung zuordnen.

Bei einem Verlust von Daten auf der Übertragungsstrecke, der vom Empfänger in Auswertung der Prüfsumme des CRC bemerkt wird, besteht nach dem bekannten Stand der Technik die Möglichkeit, durch eine Wiederholungsanforderung (ARQ = Automatic Repeat Request) des Empfängers eine oder alle PDUs eines Datenpaketes sofort wiederholt zu senden. Der Sender verwaltet hierzu eine Kopie der übertragenen PDU bzw. der PDUs eines Datenpaketes solange, bis er für die jeweiligen Dateneinheiten eine Empfangsbestätigung erhalten hat. Der Empfänger benötigt seinerseits einen genügend großen Speicher, um fehlerfreie PDUs solange zu speichern, bis alle fehlerhaften PDUs wiederholt worden sind und die Nachricht zusammengesetzt werden kann.

Mittels einer Protokollstruktur wird also der Empfänger eine PDU nochmals anfordern. Da aber mit hoher Wahrscheinlichkeit der Header der fehlerhaften PDU nicht decodiert werden kann und somit der Empfänger nicht in der Lage ist, dem Sender die richtige PDU zu wiederholen, gibt es Konzepte, bei denen der Header nicht mit den Nutzdaten in einem Verkehrskanal, sondern getrennt in einem Kontrollkanal, zum Beispiel bei Übertragung in Abwärtsrichtung (Downlink) dem FACH (Fast Associated Control Channel), mit höherem Fehlerschutz übertragen wird. Dieser Kontrollkanal benötigt, da er sich unter Umständen nicht im gleichen zeitlichen Gefüge wie der Verkehrskanal befindet, eine zusätzliche Identifizierungs-Signalisierung, um den Teilnehmer im System ausfindig zu machen und ihm den Header zuweisen zu können. Des weiteren wird dieser Kontrollkanal mit einer endlichen Kapazität von vielen Teilnehmern im System gleichzeitig genutzt, was zu einer Überlastung der Ressource führen kann.

Besonders kritisch ist bei digitalen Funk-Kommunikationssystemen, wenn die Identifizierungsnummer bzw. Sequenz-Nummer einer PDU bei der Übertragung verloren geht. Speziell bei ARQ-Fehlerkorrekturverfahren mit einer Wiederholungsanforderung durch die empfangende Station werden Sequenz-Nummern dazu verwendet, daß die Empfängerseite ergänzende Informationen zur Korrektur fehlerhaft übertragener PDUs anfordern kann. Beim sogenannten "Hybrid-ARQ I" informiert die Empfängerseite die sendende Station, die insbesondere ein Transmitter sein kann, direkt oder indirekt über die erfolglos übertragenen Sequenz-Nummern und/oder die Sequenz-Nummern der erfolglos dekodierten PDUs, die dann von der sendenden Station nochmals verschickt werden.

Bei anderen Fehlerkorrekturverfahren wie dem sogenannten "Hybrid-ARQ II"- und dem sogenannten "Hybrid-ARQ III"-Verfahren wird eine fehlerhaft empfangene PDU (1. Kodierungseinheit) mit einer nachträglich vom Sender angeforderten Zusatzinformation (2., 3., ..., n. Kodierungseinheit) verknüpft, um die PDU wiederherzustellen. Der Begriff Kodierungseinheiten" bezeichnet dabei nachfolgend die Datenmengen, insbesondere aus Datenpaketen erzeugte Informations- oder Redundanz-Mengen, die auf der Empfängerseite entweder einzeln oder durch geeignete Verknüpfung eine Wiederherstellung der Datenpakete bzw. PDUs ermöglichen. Es können auch bereits geschickte bzw. abgesendete Kodierungseinheiten nochmals abgesendet werden und mittels einer Kombinierung im bestmöglichen Verhältnis (maximum ratio combining) mit der bereits gesendeten Version kombiniert werden. Beispielsweise können bei ARQ II/III-Verfahren Kodierungspolynome verwendet werden, wobei sogenannte "rate-matching"-Maßnahmen nicht ausgenommen sind. Daher soll bei ARQ II/III oder vergleichbaren Verfahren gewährleistet werden, daß die Sequenz-Nummer vom Empfänger auch dann zuverlässig als fehlerfrei oder fehlerbehaftet erkannt wird, wenn die PDU selbst gestört ist. Weiterhin soll der Übertragungsschutz einer einzeln übertragenden Sequenz-Nummer in angemessener Qualität gegenüber der Qualität des Übertragungsschutzes der Daten sein. Dabei ist unter Umständen auch der Gewinn einer Mehrfachaussendung mit ansteigender Codiertiefe der Daten berücksichtigbar.

Bei Hybrid-ARQ II/III oder vergleichbaren Verfahren ist es daher derzeit notwendig, daß die fehlerhaft übertragenen Kodierungseinheiten im Empfänger gespeichert werden, um mit den nachfolgenden entsprechenden Kodierungseinheiten verknüpft zu werden. Die Zuordnung dieser beiden oder mehrerer jeweils zugehöriger Kodierungseinheiten kann mit Hilfe der Sequenznummer erfolgen. Durch die Nachverschickungen liegt die Reihenfolge der verschickten Sequenz-Nummern nicht von vornherein fest. Insbesondere sind die Sequenz-Nummern dadurch nicht zwingend monoton aufsteigend. Dem Empfänger werden die Sequenz-Nummern der ankommenden PDUs daher explizit mitgeteilt. Für Hybrid-ARQ II/III oder vergleichbare Verfahren ist es daher wünschenswert, daß die Sequenz-Nummer auch dann mit hoher Wahrscheinlichkeit beim Empfänger richtig ankommt, wenn die zugehörigen PDU-Daten gestört sind. Probleme können sich insbesondere ergeben, wenn die Sequenz-Nummer zusammen mit der PDU verschickt wird: Die Richtigkeit übertragener Daten kann anhand eines mit den Daten geschickten CRC überprüft werden. Bezieht sich der CRC auch auf die Sequenz-Nummer, so bestätigt ein positives CRC-Prüfergebnis die Richtigkeit von PDU und Sequenz-Nummer, während ein negativer Ausgang des CRC-Prüfergebnisses einen Fehler in der PDU und/oder in der zugehörigen Sequenz-Nummer bzw. einem Kopfabschnitt (Header) mit der Sequenznummer anzeigt. Bei negativem CRC-Prüfergebnis ist somit unklar, ob die Sequenz-Nummer bzw. der Header mit dieser richtig oder falsch empfangen oder dekodiert wurde. Wenn der Empfänger die Sequenz-Nummer einer gestörten PDU kennt, kann er sie explizit anfordern. Da die Kenntnis der Sequenz-Nummer gestörter PDUs für Hybrid-ARQ II/III oder vergleichbare Verfahren daher für die Anforderung einer wiederholten Sendung notwendig ist, muß eine Form der Übertragung der Sequenz-Nummern gewählt werden, bei der die Sequenz-Nummern sicher genug übertragen werden und bei der durch CRC-Prüfverfahren die Richtigkeit der Sequenz-Nummern unabhängig von der Richtigkeit der übertragenen PDUs festgestellt werden kann.

Bei Hybrid-ARQ II/III oder vergleichbaren Verfahren muß dem Empfänger außerdem erfolgreich signalisiert werden, ob es sich bei der eventuell gestört übertragenen Kodierungseinheit um die 1., 2., 3., ... oder n-te Kodierungseinheit handelt. Die Richtigkeit der übertragenen Kodierungseinheits-Nummer (1, 2, 3, ... oder n) kann nicht zusammen mit den Daten durch einen CRC überprüft werden. Die Richtigkeit der empfangenen Kodierungseinheits-Nummer muß auch bei gestörter Übertragung der PDU-Daten überprüfbar sein.

Bislang gibt es folgende Ansätze zur Lösung der vorstehend formulierten Probleme:
A) Für Hybrid ARQ I besteht die einfachste Möglichkeit darin, daß die Empfängerseite dem Sender bzw. Transmitter nur eine Statusmeldung über die erfolgreich empfangenen PDUs schickt. Der Sender kann daraus indirekt ablesen, welche der verschickten PDUs vom Empfänger nicht erfolgreich empfangen wurden. Dabei muß sichergestellt werden, daß die nicht bestätigten PDUs zum Absendezeitpunkt der Statusmeldung beim Empfänger bereits eingetroffen sein müßten und demzufolge offenbar gestört empfangen wurden, so daß eine erneute Versendung sinnvoll ist. Ein sicherer Empfang der Sequenz-Nummern gestörter PDUs würde das ARQ I-Verfahren deutlich vereinfachen und hätte den Vorteil, daß der Empfänger im Falle einer Störung des Übertragungskanals eine Neuverschickung der gestörten PDUs explizit ohne unnötigen Zeitverlust anfordern kann.
   Für ARQ II/III oder vergleichbare Verfahren ist eine gegenüber den Daten verbesserte Übertragung der Sequenz-Nummern unbedingt notwendig, da bei der Dekodierung sichergestellt werden muß, daß die dazu kombinierten Kodierungseinheiten zu der gleichen PDU gehören.
B) Bei zukünftigen Mobilfunksystemen, beispielsweise UMTS-Systemen (UMTS: Universal Mobile Telecommunications System), könnte im Prinzip bei einer UDD-Downlink-Übertragung (UDD: Unconstraint Delay Data bearer service), d.h. bei einer Verbindung in Abwärtsrichtung von hierarchisch übergeordneter zu untergeordneter Station, im Erwiderungsbetrieb ("acknowledged mode") der FACH für eine sicherere Übertragung der Sequenz-Nummer und gegebenenfalls der Kodierungseinheits-Nummer (z.B. Kodierungseinheits-Nummer: 1., 2. oder n-te Übertragung/Transmission) verwendet werden. Daten im FACH sind in der Regel durch bessere Kodierung und beim TDD-Verfahren (TDD: Time Division Duplex) durch Interleaving bzw. Verwürfelung über zwei Frames, als auch durch maximale Sendeleistung besser geschützt als Daten im Verkehrsdatenkanal (traffic channel TCH). Die Übertragung der Sequenz-Nummern über den FACH hat allerdings den Nachteil, daß dafür große FACH-Kapazitäten zur Verfügung gestellt werden müssen. Ungenutzte FACH-Kapazitäten sind bei Systemen mit sogenanntem hardblocking vergeudete Ressourcen. Aufgrund der hohen Übertragungsleistung von FACHs werden zusätzlich unnötig hohe Interferenz erzeugt.

Die Versendung der Sequenznummer im Verkehrskanal bietet eventuell die Möglichkeit einer für jeden Benutzer individuellen Leistungsregelung für den Übertragungsweg. Zusätzlich kann im Gegensatz zu einem rundumstrahlenden FACH der Einsatz von richtungsabhängigen Ausstrahlungen in Richtung der Empfangseinheit die Systemauslastung verbessern.

Aus der Stand der Technik sind die nachveröffentlichte WO-A-01/41349 sowie die internationale Veröffentlichung WO-A-00/05911 bekannt.

Der Erfindung liegt deshalb die Aufgabe zugrunde, den Fehlerschutz für die Identifizierungsinformation, insbesondere kennzeichnenden Nummern von Paketen bei der Übertragung auf der Funkschnittstelle zu verbessern.

Diese Aufgabe wird durch das Verfahren zum Übertragen von Paketdaten in einem Funk-Kommunikationssystem mit den Merkmalen des Anspruchs 1 und das Funk-Kommunikationssystem mit den Merkmalen des Anspruchs 23 gelöst.

Die Identifizierungsinformation von dem ihr zugeordneten Datenpaket getrennt zu übertragen erhöht die Sicherheit der vollständigen und richtigen Übertragung. Insbesondere besteht im Fall von Übertragungsfehlern nicht mehr das Problem nicht erkennen zu können, ob die Identifizierungsinformation und/oder die eigentlichen Daten fehlerhaft sind.

Daß die Identifizierungsinformation ergänzend zu der Übertragung in dem ihr zugeordneten Datenpaket von dem ihr zugeordneten Datenpaket in einem speziell für eine Übertragung der Identifizierungsinformation (PDU-Nr.) eingerichteten Kanal getrennt übertragen wird, stellt eine benutzerspezifische Verbindung sicher.

Als Identifizierungsinformation werden vorteilhafterweise die PDU-Nummer eines Datenpakets/PDU und gegebenenfalls eine Kodierungseinheit-Identifizierung des Datenpakets übertragen. Diese Informationen sind klar und knapp faßbare Daten, die problemlos von den übrigen Daten eines Datenblocks trennbar und problemlos übertragbar sind. Es besteht alternativ auch die Möglichkeit noch weitere Header-Informationen oder die gesamte Headerinformation getrennt von dem Daten-Datenpaket zu übertragen.

Die Identifizierungsinformation in einem anderen Datenpaket als dem ihr zugeordneten Datenpaket zu übertragen hat den Vorteil, daß für die Übertragung herkömmliche Datenpakete nutzbar sind.

Die Identifizierungsinformation wird vorteilhafterweise vervielfacht und auf mehrere Header des insbesondere eigenen und anderer als dem ihr zugeordneten Datenpaket verteilt übertragen, so daß eine hohe Redundanz ermöglicht wird.

Die Identifizierungsinformation auf direkt aufeinander folgende Datenpakete zu verteilen ermöglicht auch in einem Teil der Datenpakete bzw. deren Headern nur eine Teilinformation der Identifizierungsinformation zu übertragen.

Die Identifizierungsinformation von Datenpaketen innerhalb einer Folge von einer Vielzahl von Datenpaketen auf mehr Datenpakete bzw. deren Header zu verteilen als bei der Identifizierungsinformation eines oder mehrerer erster und/oder letzter Datenpakete der Folge von Datenpaketen ermöglicht einen steten Wechsel und Neubeginn von Übertragungszyklen. Bei Datenpaketen im Randbereich einer Folge von Datenpaketen die Identifizierungsinformation aus anderen Datenpaketen bzw. deren Headern zumindest teilweise durch insbesondere festgelegte Austauschinformationen zu ersetzen vereinfacht dies. Herrscht zu dem vorgesehenen Sendezeitpunkt einer Identifizierungsinformation von bestimmten Datenpaketen noch Ungewißheit über eben diese Identifizierungsinformation, so kann dies insbesondere auch durch ein spezielles Flag angezeigt werden.

Ein vorteilhaftes Fehlerprüfverfahren überprüft nach einem Fehler und einer erfolgten weiteren Übertragung, insbesondere mittels CRC, den neuen Header und das rekonstruierte Datenpaket aus der ersten und zweiten Kodierungseinheit.

Vorteilhafterweise kann die Identifizierungsinformation für ein aktuelles Datenpaket aus einem oder mehreren zuvor insbesondere als richtig empfangen bestimmten Datenpaketen mit dieser Identifizierungsinformation als Zusatzinformation übernommen werden, was die Bestimmung der Identifizierungsinformation und die Fehlerprüfung von dieser und den Daten vereinfacht.

Eine zusätzliche Anzeigeinformationen, insbesondere ein Export-/Import-Indikatorbit, bildet einen Hinweis für über mehrere Datenpakete verteilte Identifizierungsinformationen für ein Datenpaket. Bei fehlenden weiteren Identifizierungsinformationen kann auf eine entsprechend zeitaufwendige Suche nach diesen verzichtet werden.

Mehrere zugeordnete Daten-Datenpakete mit einer teilweise gemeinsamen Identifizierungsinformation über verschiedene benutzerkreisspezifische Übertragungskanäle und/oder Übertragungswege zu übertragen ermöglicht neben sicheren Verbindungen auch den einfachen Aufbau von Konferenzverbindungen.

Vorteilhafterweise werden die Sequenz-Nummern aufgrund der höheren Redundanz sicherer übertragen.

Befindet sich die Wiederholung einer Sequenznummer in dem Header einer ungestörten PDU mit positivem CRC-Check, so kann die Richtigkeit der Sequenznummer auch bei negativem CRC-Check garantiert werden.

In Hybrid ARQ I-Verfahren kann der Empfänger die Sequenz-Nummer einer gestörten PDU empfangen und kann deren Neuverschickung selbstständig und explizit anfordern.

Hybrid ARQ II/III oder vergleichbare Verfahren sind auf den korrekten und überprüfbaren Empfang der Sequenznummern gestörter PDUs angewiesen. Das Verfahren stellt ein "Inbandsignalling"-Verfahren dar, daß für Hybrid-ARQ II/III verwendet werden kann.

Das Verteilen der Sequenz-Nummer auf weitere Header erhöht noch mehr die Redundanz und damit die Detektionswahrscheinlichkeit der Sequenz-Nummer.

Die Sequenz-Nummer ist vor der Dekodierung der aktuellen Daten bekannt. Daher kann garantiert werden, daß bei Hybrid-ARQ II/III-Verfahren die richtigen Kodierungseinheiten miteinander verknüpft werden.

Bei erfolgreichen CRC-Checks können die verteilten Sequenz-Nummern für zusätzliche Konsistenzchecks verwendet werden.

Besonders vorteilhaft ist die Identifizierungsinformationen einer Vielzahl von Datenpaketen gemäß einer Ausführungsform mit eigenständiger erfinderischer Bedeutung in einem eigenen Informations-Datenpaket zu übertragen, da dies eine effiziente und gut kontrollierbare Übertragung der Informationsdaten ermöglicht. Insbesondere muß mit Blick auf die Informationsdaten nur ein einziger spezieller Datenblock mit diesen besonders zuverlässig übertragen werden. Als das Informations-Datenpaket vom Grundaufbau her ein herkömmliches Datenpaket mit einem üblichen Kopfabschnitt zu übertragen, ermöglicht die Verwendung der bestehenden Verfahren und Einrichtungen in Funk-Kommunikationssystemen ohne deren aufwendige Neuordnung. Eine zusätzlich höhere Codierung kann wünschenswert sein, um die wichtigen Header-Informationen besser als die Daten zu schützen.

Die Daten-Datenpakete in der gleichen Reihenfolge zu übertragen, in der ihre zugeordneten Identifizierungsinformationen in dem Informations-Datenpaket angeordnet sind, ermöglicht eine besonders schnelle Verarbeitung und Zuordnung beim Empfänger. Außerdem kann bestenfalls der Informationsbereich im Header des Daten-Datenübertragungsblocks für eine andere Information als die Datenpaketnummer verwendet werden. Zudem werden beim Empfänger insbesondere wenn die Identifizierungsinformation jeweils vor dem zugeordneten Datenpaket übertragen wird nur geringe Speicherkapazitäten benötigt.

Durch das Übermitteln der Kodierungseinheiten-Nummern kann die Übertragung auch gemäß einem bewährten Hybrid-ARQ-Verfahren oder vergleichbaren Verfahren erfolgen. Auch für das Hybrid-ARQ I-Verfahren ergeben sich Vorteile aus einer sicheren Übertragung von Sequenz-Nummern, die von einer Störung der PDU-Daten unabhängig sind. Der Empfänger kann dann fehlerhaft empfangene PDU-Nummern explizit und ohne Zeitverlust anfordern.

Den Empfang zumindest einer Identifizierungsinformation durch eine Bestätigungs-Antwort in Gegenübertragungsrichtung zu quittieren, bietet eine noch weiter verbesserte Sicherheit und ermöglicht zugleich eine schnelle Freigabe von Speicherressourcen.

Die Identifizierungsinformation im Fall einer fehlerhaften oder verspäteten Übertragung wiederholt zu übertragen ist besonders sinnvoll, da damit Übertragungsfehler aufgrund momentaner örtlicher oder zeitlicher Störungen des Übertragungsweges ausgeglichen werden können. Zumindest im Fall einer wiederholten Identifizierungsinformation eine Wiederholungsinformation zu übertragen erhöht die Sicherheit Fehlzuordnungen vermeiden zu können. Im Fall einer zu großen Folge von Fehlübertragungen ist auch eine automatische Fehlermeldung absetzbar und/oder die Übertragung vorübergehend oder endgültig abbrechbar.

Vor einer zugeordneten Identifizierungsinformation empfangene Daten-Datenpakete bis zum Empfang der zugeordneten Identifizierungsinformation zwischenzuspeichern ermöglicht über kürzere oder schnellere Datenwege übertragene Datenpakete beim Empfänger zu halten, bis alle zuvor erforderlichen Datenpakete dort eingetroffen sind.

Als die Identifizierungsinformation nur ein Teil der eigentlichen Identifizierungsinformation des zugeordneten Daten-Datenpakets zu übertragen, beispielsweise nur die letzten Bit der Nummer, ermöglicht zumindest eine Abschätzung über die Richtigkeit einer erfolgten Datenübertragung. Die Identifizierungsinformation in komprimierter Form der eigentlichen Identifizierungsinformation eines oder mehrerer zugeordneter Daten-Datenpakete zu übertragen, ermöglicht beispielsweise nur die erste und die letzte Datenpaketnummer einer Reihe von aufeinanderfolgenden Nummern oder eine Startnummer und eine Schrittweite folgender Nummern anzugeben.

Die Kodierung der Identifizierungsinformation vor der Übertragung erhöht sowohl die Übertragungssicherheit als auch die Möglichkeit bestimmte Fehler ohne Neuübertragungen rekonstruieren zu können.

Die Identifizierungsinformation und zugeordnete Daten-Datenpakete über verschiedene Übertragungskanäle und/oder Übertragungswege zu übertragen, ermöglicht beispielsweise, die Identifizierungsinformation über besonders sichere Datenkanäle oder Kanaltypen zu übertragen.

Insbesondere können Sequenz-Nummern und Kodierungseinheits-Nummern unabhängig von den Nutz-Daten hinreichend stark kodiert werden. Sequenz-Nummern und Kodierungseinheits-Nummern haben vorteilhafterweise einen eigenen CRC, mit dem ihre Richtigkeit getrennt von den Nutz-Daten überprüft werden kann.

Bei gestörter Übertragung der Sequenz-Nummern und Kodierungseinheits-Nummern können diese nochmals gesendet werden, ohne daß die zugehörigen PDUs neu geschickt werden müssen. Letzteres führt zu einer Entlastung der Übertragungsressourcen des Systems.

Die Nutz-Daten können sofort nach der Identifizierungsinformations- bzw. Index-PDU abgeschickt werden. Wird eine Index-PDU gestört und muß neu geschickt, kann die nachträgliche Zuordnung von Sequenz-Nummer und optional Kodierungseinheits-Nummer und Kodierungseinheit sowohl für erfolgreich als auch für nicht erfolgreich dekodierte Kodierungseinheiten erfolgen.

Die PDU-Nummer kann zusätzlich im Header der zugehörigen Daten-PDU gesendet werden. Auf diese Weise kann durch Vergleich kontrolliert werden, daß der Empfänger die richtige PDU empfangen hat.

Für Hybrid-ARQ II/III oder vergleichbare Verfahren ist die überprüfbare Richtigkeit der übertragenen Sequenz-Nummern gestörter PDUs wichtig. Das vorgestellte Verfahren bringt dabei sowohl für das Kombinieren verschiedener Kodierungseinheiten als auch für *"maximum ratio combining"* Vorteile. Für Hybrid-ARQ I ergeben sich große Vorteile bei der Retransmission-Verwaltung.

Nachfolgend werden Ausführungsbeispiele anhand der Zeichnung näher erläutert. Es zeigen:
- Fig. 1: eine einfache Form einer Funkschnittstelle zwischen zwei kommunizierenden Stationen,
- Fig. 2: den Aufbau von drei PDUs mit jeweils im Header der Sequenz-Nummer der eigenen und der direkt nachfolgenden PDU,
- Fig. 3: den Aufbau von drei PDUs mit jeweils im Header der Sequenz-Nummer der eigenen und der direkt nachfolgenden PDU sowie verschiedenen CRC für verschiedene Kodierungseinheiten,
- Fig. 4: den Aufbau von drei PDUs mit jeweils im Header der Sequenz-Nummer der eigenen und der direkt nachfolgenden PDU sowie zusätzlichem CRC für den Header,
- Fig. 5: den Aufbau von drei PDUs mit jeweils im Header der Sequenz-Nummer der eigenen und der direkt nachfolgenden PDU und einem zusätzlichen Sequential-Bit zum Anzeigen bestimmter folgender Sequenz-Nummern,
- Fig. 6: den Aufbau von drei PDUs mit jeweils im Header der Sequenz-Nummer der eigenen, der direkt vorausgehenden und der direkt nachfolgenden PDU und
- Fig. 7: den Aufbau einer Index-PDU für ein Hybrid-ARQ I-Verfahren,
- Fig. 8: den Aufbau einer Index-PDU für ein Hybrid-ARQ II/III-Verfahren und
- Fig. 9: beispielhafte PDUs bei einer Übertragung in Abwärtsrichtung.

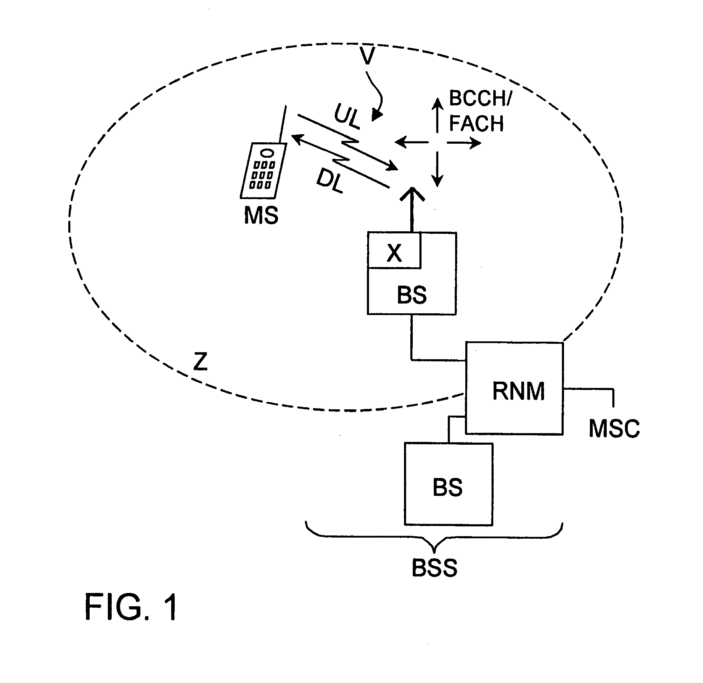

Das in Fig. 1 dargestellte Mobilfunksystem als Beispiel eines bekannten Funk-Kommunikationssystems besteht aus einer Vielzahl von Netzelementen, insbesondere von Mobilvermittlungsstellen MSC, Einrichtungen RNM zum Zuteilen von funktechnischen Ressourcen, Basisstationen BS und in der untersten Hierarchieebene Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig. 1 sind beispielhaft bestehende Verbindungen V bzw. UL, DL zur Übertragung von Nutzinformationen und Signalisierungsinformationen zwischen einer mobilen Station MS und einer Basisstation BS dargestellt. Weiterhin ist ein Organisationskanal (FACH oder BCCH: Broadcast Control CHannel) dargestellt, der zur Übertragung von Nutz- und Signalisierungsinformationen mit einer definierten Sendeleistung von jeder der Basisstationen BS für alle mobilen Stationen MS im Bereich der Funkzelle Z bereitgestellt wird.

Zur Verbesserung der Übertragungssicherheit für die Nummern der PDUs wird hier eine zusätzliche Identifizierungsinformation eingeführt. Vorzugsweise besteht diese Identifizierungsinformation aus einer zusätzlichen Wiedergabe der Sequenz-Nummer und/oder insbesondere für Hybrid-ARQ II/III oder vergleichbare Verfahren der Kodierungseinheits-Nummer in einer anderen PDU, wie dies anhand der nachfolgenden Ausführungsbeispiele und Ausführungsformen erläutert wird.

Der PDU-Header wird zusammen mit der PDU im Transportkanal übertragen, was auch als "Inband signalling" bezeichnet wird. Der Header enthält neben der Sequenz-Nummer dieser PDU, in der er sich befindet, auch Informationen über eine oder mehrere Sequenz-Nummern von einer oder mehreren anderen PDUs.

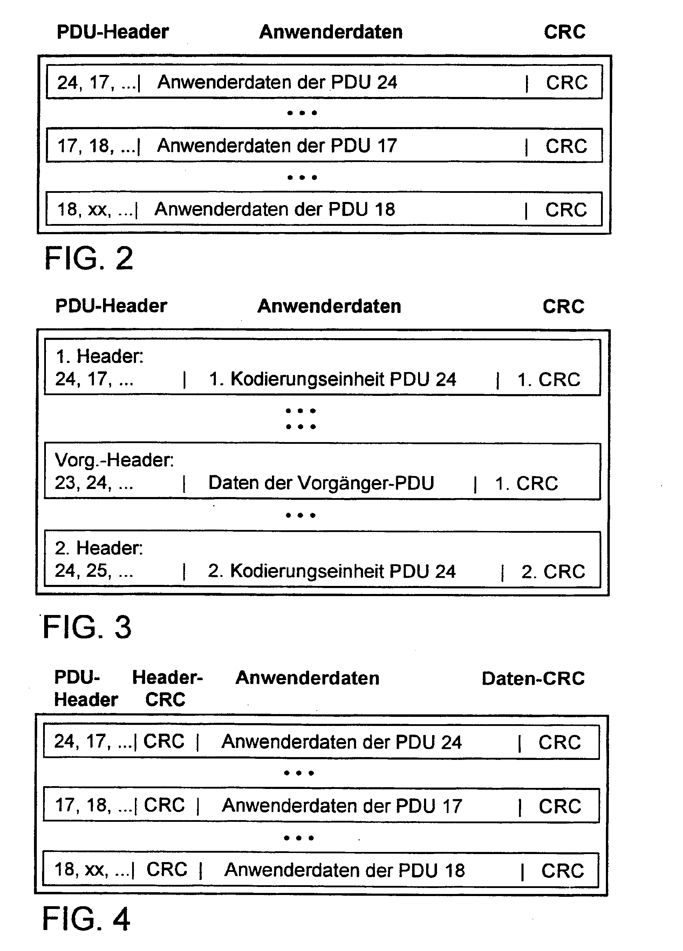

Gemäß einem ersten in Fig. 2 skizzierten Ausführungsbeispiel weist der Header in einer PDU deren Sequenz-Nummer und die Sequenz-Nummer der unmittelbar darauffolgenden PDU auf. Die Sequenz-Nummer eines Headers wird also kopiert und auf mehrere Header verteilt, hier z.B. auf den nächsten Header übertragen.

In der Fig. 2 enthält der Header der ersten zu übertragenden PDU mit der PDU-Nummer 24 zumindest die Sequenz-Nummern 24 und 17. Dem Header folgt der Abschnitt mit den eigentlichen Nutz- bzw. Anwenderdaten der PDU 24. Vorteilhafterweise schließt an den Anwenderdatenabschnitt der PDU ein CRC-Abschnitt an, der eine empfängerseitige Fehlerüberprüfung ermöglicht.

Die zweite dargestellte PDU hat die PDU-Nummer 17. Die Übertragung dieser PDU 17 erfolgt bei diesem Beispiel direkt im Anschluß an die zuvor dargestellte PDU 24. Der Header der PDU 17 enthält die eigene Sequenz-Nummer 17 und zumindest eine weitere Sequenz-Nummer, hier 18. Dem Header folgen entsprechend der Abschnitt mit den eigentlichen Nutz- bzw. Anwenderdaten der PDU 17 und ein CRC-Abschnitt.

Die dritte dargestellte PDU hat die PDU-Nummer 18. Die Übertragung dieser PDU 18 erfolgt bei diesem Beispiel direkt im Anschluß an die zuvor dargestellte PDU 17. Der Header der PDU 18 enthält die eigene Sequenz-Nummer 18 und zumindest eine weitere Sequenz-Nummer. Als weitere Sequenznummer ist hier "xx" eingetragen, was ein festgelegtes Bitmuster repräsentiert, welches dann eingetragen wird, wenn die Sequenz-Nummer folgender PDUs unbekannt ist. Dem Header folgen entsprechend der Abschnitt mit den eigentlichen Nutz- bzw. Anwenderdaten der PDU 18 und ein CRC-Abschnitt.

In der letzten PDU, d.h. wenn alle Warteschlangen (Queues) auf der Sender- bzw. Transmitterseite leer sind oder wenn unklar ist, welche Sequenznummer als nächste gesendet wird, kann somit vorteilhafterweise ein festgelegtes Bitmuster "xx" gesendet werden. Die dem Bitmuster entsprechende Sequenz-Nummer kann dann optional von dem hier vorgeschlagenen Verfahren zum verteilten Wiederholen von PDU-Sequenz-Nummern (DROPS - Distributed Repitition Of PDU Sequence numbers) ausgeschlossen werden.

Falls gemäß einer erweiterten Ausführungsform sichergestellt ist, daß im System niemals zwei PDUs mit gleicher Sequenz-Nummer hintereinander geschickt werden, kann die aktuelle PDU-Sequenz-Nummer im Header wiederholt werden, wenn die Sequenznummer der nachfolgenden PDU nicht bekannt ist. Alternativ könnte ein zusätzliches Bit die Ungewißheit über die Nachfolge-Sequenznummer andeuten. Mit dem vorgeschlagenen Verfahren wird - bis auf die erste- jede Sequenz-Nummer doppelt versandt, woraus sich ein Redundanzgewinn ergibt. Es wird nicht unbedingt in jeder PDU eine zusätzliche Prüfung nach einem CRC-Verfahren benötigt. Ergibt das überprüfende CRC-Verfahren einer PDU eine fehlerhafte Übertragung, so wird der vorangehenden erfolgreich empfangenen PDU entnommen, welche Sequenz-Nummer die gestörte PDU hat. Erst wenn zwei aufeinanderfolgende PDUs gestört sind, kann die Sequenz-Nummer der zweiten PDU nicht mehr ermittelt werden.

Es ist zu erwarten, daß durch die Verteilung der Redundanz auf mehrere PDUs die Übertragungswahrscheinlichkeit der Sequenz-Nummer deutlich höher ist, als wenn die Sequenz-Nummer mit der gleichen Redundanz in der selben PDU geschickt wird. Der Grund dafür ist die geringere Korrelation der Bitfehler für separat geschickte Daten.

Ein zweites Ausführungsbeispiel mit einer Darstellung in Fig. 3 löst ein zusätzliches Problem, das sich bei Hybrid-ARQ II-Verfahren ergibt. Bei dem Verfahren des ersten Ausführungsbeispiels (Fig. 1) unterscheidet sich der Header einer Retransmission im allgemeinen von dem Header der ersten Transmission. Falls der Header der ersten Transmission defekt war, so läßt er sich durch den Header der zweiten Transmission nicht unmittelbar durch "soft-combining" oder ähnliche Verfahren korrigieren.

Das Problem kann unter spezieller Verwendung der CRCs der verschiedenen PDU folgendermaßen gelöst werden: Der CRC in einer Erstübertragung, in Fig. 3 der Übertragung der 1. Kodierungseinheit der PDU 24, prüft die Richtigkeit von dem ersten empfangenen Header und der Rekonstruktion der PDU 24 aus der ersten Kodierungseinheit.

Ist das überprüfende CRC-Verfahren negativ, so wird die Kodierungseinheit unter der Sequenznummer abgelegt, die dem Header der Vorgänger-PDU entnommen wird.

Die dann erfolgende Übertragung der 2. Kodierungseinheit enthält einen CRC, der die Richtigkeit des zweiten Headers und die Rekonstruktion der PDU 24 aus der 1. und 2. Kodierungseinheit überprüft. Ist der CRC-Check positiv, so hat der Empfänger Gewißheit über die empfangenen PDU-Daten und die Sequenz-Nummer. Ist der CRC-Check negativ, dann entnimmt der Empfänger die Sequenznummer aus dem Header der Vorgänger-PDU, legt die Kodierungseinheit unter dieser Sequenznummer ab und fordert eine weitere Retransmission an.

Alternativ dazu kann der Empfänger versuchen, im Header die Sequenznummern durch die Informationen aus den Nachbar-PDU-Headern zu ersetzen und kann dann den CRC-Check erneut auf den korrigierten Header und die beiden Kodierungseinheiten anwenden, die laut der korrigierten Sequenz-Nummer tatsächlich zusammengehören.

In einem ersten Prüfschritt prüft der 1. CRC den 1. Header und die 1. Kodierungseinheit. In einem zweiten Prüfschritt prüft der 2. CRC den 2. Header und eine Kombination aus 1. und 2. Kodierungseinheit.

Das in Fig. 4 skizzierte dritte Ausführungsbeispiel zeigt ein alternatives Verfahren zum zweiten Ausführungsbeispiel, um die Vorgehensweise des ersten Ausführungsbeispiels auf Hybrid-ARQ II/III-Systeme anzuwenden. Dabei werden zwei CRC, nämlich ein Header-CRC für den Header und ein Daten-CRC für die PDU-Daten benutzt. Hier dient der Header-CRC der Überprüfung des Headers, während der Daten-CRC nur die Richtigkeit der durch Dekodierung ermittelten PDU-Anwenderdaten überprüft. Die Daten-CRCs bei der ersten und zweiten Kodierungseinheit beziehen sich auf die gleichen PDU-Daten und sind somit identisch. Durch die zweite Verschickung des CRC's können eventuelle Fehler im CRC der ersten Übertragung z.B. durch das sogenannte "maximum ratio combining" korrigiert werden.

Durch die Verwendung zweier CRCs wird die Wahrscheinlichkeit erhöht, daß die Richtigkeit des Headers einer PDU durch positiven CRC-Check erfolgreich bestätigt wird, da der CRC-Check des Headers unabhängig von Fehlern in dem im allgemeinen deutlich längeren Daten-Bereich erfolgt. Die Zahl der pro PDU zur Verfügung stehenden Nutz-Bit sinkt allerdings um die Bitmenge, die für den zweiten CRC benötigt wird.

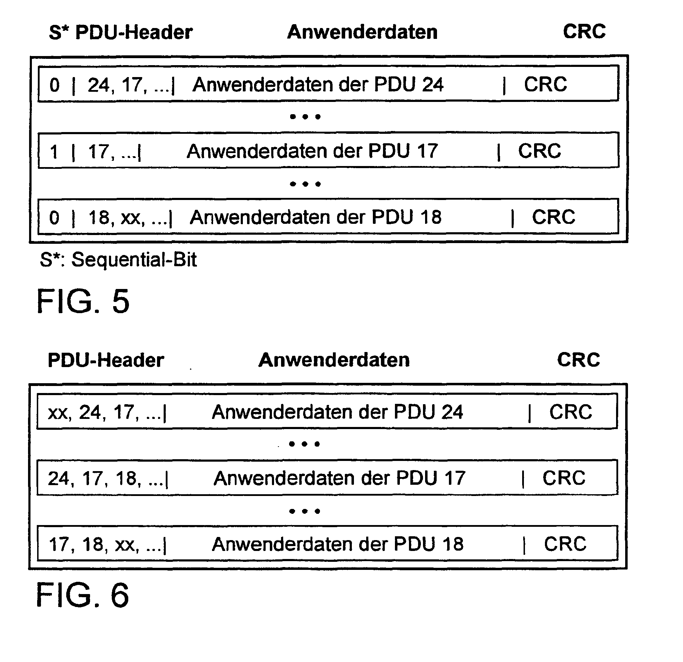

Das Konzept eines vierten Ausführungsbeispiels, zu dem drei PDUs in Fig. 5 skizziert sind, ergänzt die ersten drei Ausführungsbeispiele durch ein Header-Komprimierungsverfahren. Dazu wird im Header ein Sequential-Bit eingefügt, welches mitteilt, ob die nachfolgende Sequenz-Nummer um 1 größer als die aktuelle Sequenz-Nummer ist (Sequential-Bit=1) oder ob dies nicht der Fall ist (Sequential-Bit=0). Im ersteren Fall wird die Sequenz-Nummer der nachfolgenden PDU nicht explizit im Header übertragen. Die Größe des Headers wird dadurch für viele Anwendungsfälle reduziert. Der Ressourcen-Gewinn kann z.B. für ein niedrigeres Puncturing der Nutz-Daten genutzt werden.

Gemäß einem fünften Ausführungsbeispiel, zu dem in Fig. 6 drei PDUs dargestellt sind, wird in Ergänzung zu den vorstehend beschriebenen Ausführungsbeispielen vorgeschlagen, außer der Sequenz-Nummer der aktuellen PDU und der Sequenz-Nummer der nachfolgenden PDU zusätzlich auch die Sequenz-Nummer der vorangehenden PDU übertragen. Dies führt zu einer weiter erhöhten Redundanz.

Während beim ersten Ausführungsbeispiel durch ein entsprechendes Bitmuster berücksichtigt wurde, daß nach z.B. einer letzten zu übertragenden PDU keine Informationen über eine nachfolgende Sequenz-Nummer vorliegen, wird hier sinnvollerweise auch berücksichtigt, daß für den Header der ersten übertragenen PDU keine Sequenz-Nummer einer vorhergehenden PDU bekannt ist. Dies kann entsprechend dem ersten Ausführungsbeispiel z.B. durch ein festgelegtes Bitmuster gekennzeichnet werden.

Gemäß einem sechsten Ausführungsbeispiel werden in Ergänzung zu anderen Ausführungsbeispielen in dem Header außer der Sequenznummer der eigenen PDU zusätzlich die Sequenznummern oder eventuell Sequential-Bit für m vorhergehende und/oder n nachfolgende PDUs eingetragen. Die Variablen m und n sind dabei ganze Zahlen größer oder gleich 0, die spätestens zu Beginn des Services festgelegt werden sollten. Wenn Sequential-Bit s(-m),s (-m+1),.., s(n-1),s(n) verwendet werden, so wird s(j) in einer PDU mit der Sequenznummer k auf 1 gesetzt, wenn die PDU im Abstand j eine Sequenznummer k+j hat. Die Redundanz der Sequenznummer steigt proportional zu m+n.

Gemäß einem siebten Ausführungsbeispiel müssen in Abwandlung der anderen Ausführungsbeispiele die PDUs, die durch die Sequenznummern verkettet sind, nicht benachbart sein. Das heißt, der Header enthält Sequenz-Nummern s(-m),...,s(n), die sich auf die PDUs in Abständen d(-m),...,d(n) beziehen. So könnte das erste Ausführungsbeispiel z.B. derart abgewandelt werden, daß der Header die eigene Sequenznummer und die Sequenznummer der k PDUs entfernten, nachfolgenden PDU enthält. Durch den größeren zeitlichen Abstand der PDUs erhöht sich der durch Interleaving bzw. Verwürfelung erzielte Gewinn. Gemäß einem achten Ausführungsbeispiel wird in Abwandlung der anderen Ausführungsbeispiele die verteilte Wiederholung der Sequenz-Nummern durch andere Redundanz-Informationen ersetzt.

Gemäß einem neunten Ausführungsbeispiel werden in Abwandlung der anderen Ausführungsbeispiele bei erfolgreichem CRC-Prüfverfahren einer PDU die im Header befindlichen Sequenznummern von nachfolgenden PDUs als gültige Sequenznummern der nachfolgenden PDUs benutzt. Das hat den Vorteil, daß man bei diesen nachfolgenden PDUs schon vor Dekodierung und CRC-Check sicher weiß, welche Sequenznummer die PDU hat. Dies ist bei ARQ II-Verfahren besonders vorteilhaft, weil dabei vermieden wird, daß eine Kodierungseinheit mit einer falschen Kodierungseinheit kombiniert wird.

Gemäß einem zehnten Ausführungsbeispiel wird in Abwandlung der anderen Ausführungsbeispiele ein Vergleich der mehrfach versendeten Sequenznummern als Konsistenz-Check verwendet, der die Fehlerdetektionsrate, die durch die Prüfung des CRC-Verfahrens gegeben ist, noch zusätzlich verbessert.

Gemäß einem elften Ausführungsbeispiel werden die anderen Ausführungsbeispiele um die Möglichkeit erweitert, daß die über mehrere PDUs verteilte Information/Redundanz zu der Sequenz-Nummer/Kodierungseinheits-Nummer kombiniert wird, um eine höhere Detektionswahrscheinlichkeit der Sequenz-Nummer/Kodierungseinheits-Nummer zu erzielen. Beispielsweise kann ein hard- oder soft-combining zwischen zwei oder mehreren Sequenz-Nummer-Replica durchgeführt werden, die in verschiedenen Headern übertragen worden sind.

Als eine andere Möglichkeit können verschiedene Kodierungswörter aus der Sequenz-Nummer/Kodierungseinheits-Nummer einer PDU gebildet werden, die dann ähnlich wie beim Hybrid-ARQ II/III-Verfahren einzeln oder in Kombination zur Dekodierung herangezogen werden. Die Detektion der gewünschten Information wird dabei durch Interleaving-Effekte begünstigt.

Gemäß einem zwölften Ausführungsbeispiel enthält der Header in Abwandlung der anderen Ausführungsbeispiele zusätzlich ein oder mehrere Export-Indikator-Bit, die anzeigen, ob die Sequenz-Nummer/Kodierungseinheits-Nummer-Information in andere PDUs "exportiert" wurde, d.h. ob sich in den Headern der PDUs, die für die Redundanzübertragung der Sequenz-Nummer/Kodierungseinheits-Nummer vorgesehen sind, diese Redundanz auch tatsächlich befindet. Damit kann sehr flexibel von PDU zu PDU entschieden werden, ob die Sequenz-Nummer/Kodierungseinheits-Nummer auf andere PDUs verteilt wird oder nicht.

Gemäß einem dreizehnten Ausführungsbeispiel enthält der Header in Abwandlung der anderen Ausführungsbeispiele zusätzlich ein oder mehrere Import-Indikator-Bit, die anzeigen, welche Redundanz/Information sich in dem Header der aktuellen PDU befindet, die zur Rekonstruktion der Sequenz-Nummer/Kodierungseinheits-Nummer anderer PDUs genutzt werden kann. Auch dieser Vorschlag trägt dazu bei, daß sehr flexibel von PDU zu PDU entschieden werden kann, ob die Sequenz-Nummer/Kodierungseinheits-Nummer auf andere PDUs verteilt wird oder nicht.

Bei den vorstehenden Ausführungsbeispielen wird nur die Information/Redundanz zur Sequenz-Nummer und optional zur Kodierungseinheits-Nummer auf andere PDU-Header verteilt. Man kann auch zusätzlich oder alternativ dazu die Information/Redundanz gemäß einem vierzehnten Ausführungsbeispiel zum gesamten Header oder zu bestimmten Teilen des Headers einer PDU erzeugen und diese Information/Redundanz an die Header anderer PDUs anhängen.

Gemäß einem fünfzehnten Ausführungsbeispiel mit eigenständiger erfinderischer Bedeutung wird zur Verbesserung der Übertragungssicherheit für die Übertragung der Nummern der PDUs eine zusätzliche PDU eingeführt, die hier nachfolgend als Index-PDU bezeichnet wird.

Die informationstragenden PDUs, die hier nachfolgend als RLC-PDUs bezeichnet werden und die bei einer Übertragung im Erwiderungsbetrieb (acknowledged mode) übertragen werden sollen, werden in Gruppen von n PDUs zusammengefaßt. Für jede Gruppe von n PDUs wird eine Index-PDU erstellt, in der die Sequenz-Nummern dieser n PDUs übertragen werden. Diese Index-PDU wird von der Basisstation BS zu der kommunizierenden mobilen Station MS von den n PDUs getrennt übertragen. Wie jede andere PDU kann auch die Index-PDU mit einem Header versehen werden.

Sinnvollerweise, aber nicht notwendig, wird die Index-PDU dabei als erste vor den zugehörigen n PDUs verschickt, so daß auf der Empfängerseite beim Eintreffen der PDUs die zugehörigen Sequenz-Nummern schon bekannt sind. Dadurch kann insbesondere auch auf eine Numerierung der einzelnen folgenden PDU-Header verzichtet werden.

Für Hybrid-ARQ II/III oder vergleichbare Verfahren werden in der Index-PDU neben den Sequenz-Nummern auch die KodierungsEinheits-Nummern übertragen.

Dazu wird beim Senden und Empfangen der PDU-Kodierungseinheiten vorteilhafterweise auch auf ein Beibehalten von deren Reihenfolge geachtet.

Der erfolgreiche Empfang der Index-PDU sollte durch eine Bestätigungs-Antwort ACK/NACK ("ACKnowledged"/"Not ACKnowledged") quittiert werden. Falls der Sender eine NACK-Antwort für die Index-PDU erhält, sendet er letztere noch einmal. Dabei sollte in der Index-PDU durch einen Wiederholungsmerker bzw. ein Retransmission-Flag markiert sein, um zu signalisieren, daß es sich um eine Wiederholungssendung (Retransmission) einer Index-PDU handelt.

Der Sender kann vorteilhafterweise schon mit dem Versenden der PDUs beginnen, bevor er das ACK/NACK für die Index-PDU empfangen hat. Ist die Index-PDU nicht erfolgreich empfangen worden, muß der Empfänger die nachfolgend eintreffenden PDUs dennoch nicht verwerfen, falls er sie in einem Puffer zwischengespeichert hat.

Die PDU-Nummer kann auch noch zusätzlich im Header der zugehörigen Daten-PDU gesendet werden, wie dies bislang üblich ist. Dies ist dann nützlich, wenn die Möglichkeit besteht, daß der Empfänger eine falsche PDU empfängt. Bei UMTS-Systemen besteht die Möglichkeit, mehrere Dienste (Services) über denselben DSCH-Kanal zu senden. Dem Empfänger wird dann mit Hilfe eines TFCI signalisiert, welche Ressourcen im aktuellen Übertragungsintervall zu welchem Service gehören. Ein gestört übertragener TFCI kann nun eventuell dazu führen, daß ein Benutzer unbemerkt die PDUs aus den falschen Ressourcen bezieht. Wird die Sequenz-Nummer einer PDU nicht nur in der Index-PDU sondern auch im Header der betreffenden Daten-PDU übertragen, so läßt sich durch Vergleich der getrennt übertragenen Sequenznummer-Informationen überprüfen, ob die richtige PDU vom Empfänger empfangen wurde.

Um Datenkapazität zu sparen, besteht alternativ auch die Möglichkeit, nur die z.B. niedrigsten Bit der Sequenz-Nummer im Header der PDU zu übertragen.

In der Index-PDU kann die Angabe der PDU-Nummern und der Kodierungseinheits-Nummern auch in komprimierter Form erfolgen. Beispielsweise kann in kompakter Form mitgeteilt werden, daß das erste der nachfolgenden PDUs die Index-Nummer 17 hat und die Index-Nummern der nachfolgenden 40 PDUs von PDU zu PDU stets um 1 steigt, wobei z.B. stets die 1. Kodierungseinheit geschickt wird.

In der Index-PDU können die Sequenz-Nummern (und gegebenenfalls die Kodierungseinheits-Nummern) zusammen hinreichend sicher kodiert werden, ohne daß unnötiger Overhead erzeugt wird.

Für den Hybrid-ARQ II/III oder vergleichbare Verfahren führt die Kombination verschiedener Kodierungseinheiten zu einer effektiv höheren Kodierung. Damit die Fehlerwahrscheinlichkeit der Index-PDU keine Beeinträchtigung der Übertragungsqualität bei Hybrid-ARQ II/III darstellt, sollte die Index-PDU mit entsprechend starker Kodierung gesendet werden.

Mit Hilfe eines CRC's kann die Richtigkeit der empfangenen Sequenz-Nummern (und gegebenenfalls der Kodierungseinheits-Nummern) in für sich bekannter Art und Weise von den PDU-Daten getrennt überprüft werden.

Die Index-PDU kann mit der normalen Sendeleistung des zugehörigen Verkehrskanals (traffic channels) übertragen werden. Es entsteht somit weniger störende Interferenz als bei einer Versendung über den FACH.

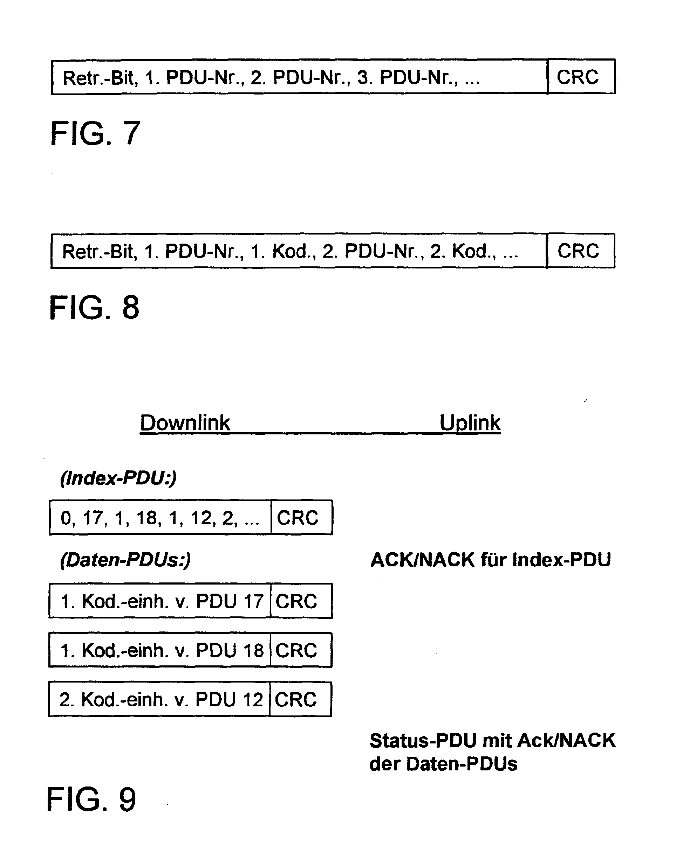

Wie aus Fig. 7 ersichtlich, die den Aufbau einer Index-PDU für ein Hybrid-ARQ I-Verfahren skizziert, beginnt eine solche Index-PDU z.B. mit einem Wiederholungsbit bzw. Retransmissionsbit zur Anzeige einer ersten oder einer wiederholten Übertragung. Anstelle eines einzigen Bit können auch mehrere Bit verwendet werden, wodurch eine Schrankensetzung ermöglicht wird, die eine Fehlermeldung oder einen Abbruch der Übertragung nach z.B. 30 vergeblichen Übertragungsversuchen auslöst.

Danach folgen die einzelnen PDU-Nummern einer Vielzahl von Daten-PDUs, deren PDU-Nummern in dieser Index-PDU aufgelistet sind. Werden die Daten-PDU in der selben Reihenfolge wie in der Auflistung übertragen, so muß in diesen selber nicht notwendigerweise auch deren eigene PDU-Nummer enthalten sein.

Zum Abschluß folgt die CR-Codierung CRC, wie sie bereits von den Daten-PDU her für sich zur Fehlerkorrektur bekannt ist.

Wie aus Fig. 8 ersichtlich, die den Aufbau einer Index-PDU für ein Hybrid-ARQ II/III-Verfahren skizziert, ist dieser Aufbau dem der Fig. 7 vergleichbar. Eine solche Index-PDU beginnt z.B. auch mit einem Wiederholungsbit bzw. Retransmissionsbit.

Danach folgen wiederum die einzelnen PDU-Nummern einer Vielzahl von Daten-PDUs, deren PDU-Nummern in dieser Index-PDU aufgelistet sind. Hierbei werden jedoch zusätzlich zu den PDU-Nummern auch die Nummern der entsprechenden Kodierungseinheiten übertragen. Zweckmäßigerweise werden diese im Wechsel mit den PDU-Nummern angeordnet aufgelistet.

Zum Abschluß folgt vorteilhafterweise wieder die CR-Codierung.

Bei dem in Fig. 9 dargestellten Ablauf erfolgen untereinander stehende Übertragungen zeitlich nacheinander. In der linken Spalte sind Übertragungen in Abwärtsrichtung / Downlink von einer Basisstation BS zu einer Datenendeinrichtung, z.B. Teilnehmerstation MS und in der rechten Spalte sind Übertragungen in Aufwärtsrichtung / Uplink von der Datenendstation MS zur Basisstation BS dargestellt.

Demnach wird als erstes eine Index-PDU in Abwärtsrichtung übertragen, hier mit der Angabe einer ersten Übertragung und den Zahlenwerten 17, 1, 18, 1, 12, 2 usw.

Dem folgt eine Bestätigung ACK/NACK in Aufwärtsrichtung, wobei diese Bestätigung auch zu einem späteren Zeitpunkt erfolgen könnte.

Schließlich werden in Abwärtsrichtung die einzelnen Daten-PDUs übertragen, und zwar vorzugsweise zuerst die Daten-PDU mit der 1. Kodierungseinheit von der PDU-Nummer 17, gefolgt von der 1. Kodierungseinheit von der PDU-Nummer 18, gefolgt von der 2. Kodierungseinheit von der PDU-Nummer 12 usw. Abschließend wird in Aufwärtsrichtung eine Bestätigung oder Status-PDU für die in Abwärtsrichtung übertragenen Daten-PDUs gesendet.

Insbesondere kann auch ein spezieller Informationskanal für die Übertragung solcher Signalisierungsinformationen für Datenpakete verwendet oder eingerichtet werden, wobei ein solcher Kanal vorteilhafterweise als ein benutzerkreisspezifischer Übertragungskanal ausgebildet ist.

## Patentansprüche

1. Verfahren zur Übertragung von Informationen über Datenpakete (PDUs) bei einer Paketdatenübertragung über eine Funkschnittstelle eines Kommunikationssystems, bei dem zwischen miteinander kommunizierenden Stationen (BS, MS) für jedes Datenpaket (PDU) eine Identifizierungsinformation (PDU-Nr.) übertragen wird,
**dadurch gekennzeichnet,**
**daß** die Identifizierungsinformation (PDU-Nr.) sowohl in dem ihr zugeordneten Datenpaket (PDU) als auch von dem ihr zugeordneten Datenpaket (PDU) getrennt in einem speziell für eine Übertragung der Identifizierungsinformation (PDU-Nr.) eingerichteten Kanal übertragen wird.

2. Verfahren nach Anspruch 1, bei dem die Identifizierungsinformation (PDU-Nr.) in mindestens einem anderen als dem ihr zugeordneten Datenpaket (PDU) übertragen wird.

3. Verfahren nach Anspruch 2, bei dem die Identifizierungsinformation (PDU-Nr.) in dem ihr zugeordneten Datenpaket (PDU) und zusätzlich in mindestens einem anderen als dem ihr zugeordneten Datenpaket (PDU) übertragen wird.

4. Verfahren nach einem Anspruch 3, bei dem die Identifizierungsinformation (PDU-Nr.) in dem ihr zugeordneten Datenpaket (PDU) und zusätzlich in einem direkt folgenden und/oder direkt vorhergehenden Datenpaket des ihr zugeordneten Datenpakets (PDU) übertragen wird.

5. Verfahren nach einem vorstehenden Anspruch, bei dem die Identifizierungsinformation (PDU-Nr.) von Datenpaketen (PDU) innerhalb einer Folge von Datenpaketen auf mehr Datenpakete verteilt ist als die Identifizierungsinformation eines oder mehrerer erster und/oder letzter Datenpakete (PDU) der Folge von Datenpaketen.

6. Verfahren nach Anspruch 5, bei dem bei Datenpaketen (PDU) im Randbereich einer Folge von Datenpaketen die Identifizierungsinformation (PDU-Nr.) aus anderen Datenpaketen bzw. deren Headern zumindest teilweise durch Austauschinformationen (xx) ersetzt wird.

7. Verfahren nach einem vorstehenden Anspruch, bei dem eine Ungewißheit über die Identifizierungsinformation (PDU-Nr.) von bestimmten Datenpaketen durch einen Indikator angezeigt wird.

8. Verfahren nach einem vorstehenden Anspruch, bei dem ein Fehlerprüfverfahren bei einer Erstübertragung Header und rekonstruierte Daten eines Datenpakets überprüft und bei einem Fehler entsprechend der zusätzlichen Identifizierungsinformation (PDU-Nr.) eines anderen Datenpakets verarbeitet.

9. Verfahren nach Anspruch 8, bei dem ein Fehlerprüfverfahren nach einem Fehler und einer erfolgten weiteren Übertragung den neuen Header und das rekonstruierte Datenpaket aus der aktuellen und einer oder mehreren früher und/oder später verschickten Kodierungseinheiten überprüft und bei einem Fehler eine weitere Neuübertragung des Datenpakets anfordert.

10. Verfahren nach einem vorstehenden Anspruch, bei dem bei einer Datenübertragung ein Merker (S) zusätzlich, als I-dentifizierungsinformation oder anstelle einer Identifizierungsinformation weiterer Datenpakete übertragen wird, der eine Systematik in der Folge aufeinanderfolgender Identifizierungsinformationen (PDU-Nr.) von Datenpaketen (PDU) signalisiert.

11. Verfahren nach einem vorstehenden Anspruch, bei dem die Identifizierungsinformation (PDU-Nr.) für ein aktuelles Datenpaket (PDU) aus einem oder mehreren zuvor empfangenden Datenpaketen mit dieser Identifizierungsinformation als Zusatzinformation übernommen wird.

12. Verfahren nach einem vorstehenden Anspruch, bei dem zusätzliche Anzeigeinformationen (Export-/Import-Indikatorbit) eine über mehrere Datenpakete verteilte Identifizierungsinformation (PDU-Nr.) für ein Datenpaketen (PDU) signalisieren.

13. Verfahren nach einem der vorstehenden Ansprüche, bei dem die Identifizierungsinformation (PDU-Nr.) in komprimierter Form der eigentlichen Identifizierungsinformation (PDU-Nr.) eines oder mehrerer zugeordneter Datenpakete (PDUs) übertragen wird.

14. Verfahren nach einem der voranstehenden Ansprüche, bei dem mehrere Informations- und/oder Redundanz-Teile der Identifizierungsinformation eines Datenpakets (PDU), die in verschiedenen Datenpaketen (PDUs) oder deren Headern übertragen werden, einzeln und/oder kombiniert zur Dekodierung der Identifizierungsinformation herangezogen werden.

15. Verfahren nach einem vorstehenden Anspruch, bei dem die Identifizierungsinformation (PDU-Nr.) durch ganze Header oder bestimmte Teile des Headers ersetzt wird.

16. Verfahren nach einem der vorstehenden Ansprüche, bei dem mehrere zugeordnete Datenpaketen (PDU) mit einer teilweise gemeinsamen Identifizierungsinformation (PDU-Nr.) über verschiedene benutzerkreisspezifische Übertragungskanäle (V) und/oder Übertragungswege übertragen werden.

17. Verfahren nach Anspruch 2, bei dem die Identifizierungsinformationen (PDU-Nr.) einer Vielzahl von Datenpaketen (PDUs) in einem eigenen Informations-Datenpaket (Index-PDU) übertragen werden.

18. Verfahren nach Anspruch 17, bei dem die Datenpakete (PDUs) in der gleichen Reihenfolge übertragen werden, wie ihre zugeordneten Identifizierungsinformationen in dem Informations-Datenpaket (Index-PDU) angeordnet sind.

19. Verfahren nach einen der Ansprüche 17 oder 18, bei dem Datenpakete (PDUs) bei deren Übertragung keine eigene Identifizierungsinformation (PDU-Nr.) enthalten.

20. Verfahren nach einem der Ansprüche 17 bis 19, bei dem die getrennt übertragene Identifizierungsinformation (PDU-Nr.) im Fall einer fehlerhaften oder verspäteten Übertragung wiederholt übertragen wird.

21. Verfahren nach einem der Ansprüche 17 bis 20, bei dem als die getrennt übertragene Identifizierungsinformation (PDU-Nr.) nur ein Teil der eigentlichen Identifizierungsinformation (PDU-Nr.) des zugeordneten Datenpakets (PDU) übertragen wird.

22. Verfahren nach einem der Ansprüche 17 bis 20, bei dem die getrennt übertragene Identifizierungsinformation (PDU-Nr.) in komprimierter Form der eigentlichen Identifizierungsinformation (PDU-Nr.) eines oder mehrerer zugeordneter Datenpakete (PDUs) übertragen wird.

23. Funk-Kommunikationssystem mit zumindest zwei Stationen (BS, MS), die zum Austauschen von Datenpaketen (PDUs) über eine Funkschnittstelle (V, FACH, BCCH) ausgelegt sind mit
- zumindest zwei Stationen (BS, MS), die zum Austauschen von Datenpaketen (PDUs) über eine Funkschnittstelle (V, FACH, BCCH) ausgelegt sind,
- Übertragungseinrichtungen zum Übertragen von Informationen über Datenpakete (PDUs) bei einer Paketdatenübertragung über die Funkschnittstelle, wobei zwischen den miteinander kommunizierenden Stationen (BS, MS) für jedes Datenpaket (PDU) eine Identifizierungsinformation (PDU-Nr.) übertragen wird, **gekennzeichnet durch**,
- zumindest eine Einrichtung (X) in den Stationen (MS, BS) zum Übertragen der Identifizierungsinformation (PDU-Nr.) in dem ihr zugeordneten Datenpaket (PDU) und zum getrennten Ü-bertragen der Identifizierungsinformation (PDU-Nr.) und des der Identifizierungsinformation zugeordneten Datenpakets (PDU), die die Identifizierungsinformation (PDU-Nr.) in einem speziell dafür eingerichteten Kanal überträgt.

## Claims

1. Method for transmitting information via data packets (PDUs) in a packet data transmission via a radio interface of a communications system, in which an item of identification information (PDU-No.) is transmitted for each data packet (PDU) between stations (BS, MS) which communicate with one another, **characterized in that** the identification information (PDU-No.) is transmitted both in the data packet (PDU) assigned to it as well as separately from the data packet (PDU) assigned to it in a channel specially set up for a transmission of the identification information (PDU-No).

2. Method according to Claim 1, in which the identification information (PDU-No.) is transmitted in at least one data packet (PDU) other than that assigned to it.

3. Method according to Claim 2, in which the identification information (PDU-No.) is transmitted in the data packet (PDU) assigned to it, and additionally in at least one other data packet (PDU) than the one assigned to it.

4. Method according to Claim 3, in which the identification information (PDU-No.) is transmitted in the data packet (PDU) assigned to it, and additionally in a data packet which directly follows and/or directly precedes the data packet (PDU) assigned to it.

5. Method according to a preceding claim, in which the identification information (PDU-No.) of data packets (PDU) is distributed, within a sequence of data packets, between more data packets than the identification information of one or more first and/or last data packets (PDU) of the sequence of data packets.

6. Method according to Claim 5, in which, when there are data packets (PDU) in the edge region of a sequence of data packets, the identification information (PDU-No.) composed of other data packets or their headers is replaced at least partially by replacement information (xx).

7. Method according to a preceding claim, in which uncertainty about the identification information (PDU-No.) of specific data packets is indicated by an indicator.

8. Method according to a preceding claim, in which, in the case of a first transmission, an error checking method checks headers and reconstructed data of a data packet, and in the case of an error processes in accordance with the additional identification information (PDU-No.) of another data packet.

9. Method according to Claim 8, in which, after an error and further transmission has taken place, an error checking method checks the new header and the reconstructed data packet from the current coding unit and from one or more of the coding units which have been sent earlier and/or later, and requests further retransmission of data packet in the case of an error.

10. Method according to a preceding claim, in which, during a data transmission, a marker (S) is transmitted additionally, as identification information or instead of an item of identification information of further data packets, which marker (S) signals a systematic ordering system in the sequence of successive items of identification information (PDU-No.) of data packets (PDU).

11. Method according to a preceding claim, in which the identification information (PDU-No.) for a current data packet (PDU) is transferred from one or more previously received data packets with this identification information as supplementary information.

12. Method according to a preceding claim, in which additional indicator information (export/import indicator bit) signals an item of identification information (PDU-No.) for a data packet (PDU), said identification information (PDU-No.) being distributed over a plurality of data packets.

13. Method according to one of the preceding claims, in which the identification information (PDU-No.) is transmitted in compressed form of the actual identification information (PDU) of one or more assigned data packets (PDUs).

14. Method according to one of the preceding claims, in which a plurality of information and/or redundancy portions of the identification information of a data packet (PDU) which is transmitted in various data packets (PDUs) or their headers are used individually and/or in combination for decoding the identification information.

15. Method according to a preceding claim, in which the identification information (PDU-No.) is replaced by entire headers or specific parts of the header.

16. Method according to one of the preceding claims, in which a plurality of assigned data packets (PDU) with partially common identification information (PDU-No.) are transmitted over various user-group-specific transmission channels (V) and/or transmission paths.

17. Method according to Claim 2, in which the identification information (PDU-No.) of a multiplicity of data packets (PDUs) is transmitted in a separate information data packet (Index-PDU).

18. Method according to Claim 17, in which the data packets (PDUs) are transmitted in the same order in which their assigned identification information is arranged in the information data packet (Index-PDU).

19. Method according to one of Claims 17 or 18, in which, during their transmission, data packets (PDUs) do not contain their own identification information (PDU-No.).

20. Method according to one of Claims 17 to 19, in which the separately transmitted identification information (PDU-No.) is transmitted repeatedly in the case of errored or delayed transmission.

21. Method according to one of Claims 17 to 20, in which only a portion of the actual identification information (PDU-No.) of the assigned data packet (PDU) is transmitted as the separately transmitted identification information (PDU-No.).

22. Method according to one of Claims 17 to 20, in which the separately transmitted identification information (PDU-No.) is transmitted in a compressed form of the actual identification information (PDU-No.) of one or more assigned data packets (PDUs).

23. Radio communications system having at least two stations (BS, MS) which are configured to exchange data packets (PDUs) via a radio interface (V, FACH, BCCH) with
- at least two stations (BS, MS) which are configured to exchange data packets (PDUs) via a radio interface (V, FACH, BCCH),
- transmitter devices for transmitting information via data packets (PDUs) in a packet data transmission via the radio interface, an item of identification information (PDU-No.) being transmitted for each data packet (PDU) between the stations (BS, MS) which communicate with one another, **characterized by**
- at least one device (X) in the stations (MS, BS) for transmitting the identification information (PDU-No.) in the data packet (PDU) assigned to it and for separately transmitting the identification information (PDU-No.) and the data packet (PDU) assigned to the identification information, which device (X) transmits the identification information (PDU-No.) in a channel specially set up for this purpose.

## Revendications

1. Procédé de transmission d'informations sur des paquets de données (PDUs) lors d'une transmission de données par paquets via une interface radio d'un système de communication, selon lequel une information d'identification (PDU-Nr.) est transmise, pour chaque paquet de données, entre des stations (BS, MS) qui communiquent entre elles, **caractérisé en ce que** l'information d'identification (PDU-Nr.) est transmise non seulement dans le paquet de données (PDU) qui lui est associé, mais aussi, de manière séparée du paquet de données (PDU) qui lui est associé, dans un canal aménagé spécialement pour une transmission de l'information d'identification (PDU-Nr.).

2. Procédé selon la revendication 1, selon lequel l'information d'identification (PDU-Nr.) est transmise dans au moins un paquet de données (PDU) autre que celui qui lui est associé.

3. Procédé selon la revendication 2, selon lequel l'information d'identification (PDU-Nr.) est transmise dans le paquet de données (PDU) qui lui est associé et additionnellement dans au moins un paquet de données (PDU) autre que celui qui lui est associé.

4. Procédé selon la revendication 3, selon lequel l'information d'identification (PDU-Nr.) est transmise dans le paquet de données (PDU) qui lui est associé et additionnellement dans un paquet de données qui suit et/ou qui précède directement le paquet de données (PDU) qui lui est associé.

5. Procédé selon une revendication précédente, selon lequel l'information d'identification (PDU-Nr.) de paquets de données (PDU) est répartie, à l'intérieur d'une suite de paquets de données, sur un plus grand nombre de paquets de données que l'information d'identification d'un ou de plusieurs premiers et/ou derniers paquets de données (PDU) de la suite de paquets de données.

6. Procédé selon la revendication 5, selon lequel l'information d'identification (PDU-Nr.) d'autres paquets de données resp. de leurs en-têtes est, dans le cas de paquets de données (PDU) situés dans la zone de bord d'une suite de paquets de données, remplacée au moins en partie par des informations de remplacement (xx).

7. Procédé selon une revendication précédente, selon lequel une incertitude concernant l'information d'identification (PDU-Nr.) de certains paquets de données est indiquée par un indicateur.

8. Procédé selon une revendication précédente, selon lequel un procédé de contrôle d'erreur vérifie, lors d'une première transmission, l'en-tête et des données reconstruites d'un paquet de données et les traite, en cas d'erreur, conformément à l'information d'identification supplémentaire (PDU-Nr.) d'un autre paquet de données.

9. Procédé selon la revendication 8, selon lequel un procédé de contrôle d'erreur, après une erreur et après qu'une autre transmission a été effectuée, vérifie le nouvel en-tête et le paquet de données reconstruit de l'unité de codage actuelle et d'une ou de plusieurs unités de codage envoyées auparavant et/ou ultérieurement et, en cas d'erreur, demande une autre nouvelle transmission du paquet de données.

10. Procédé selon une revendication précédente, selon lequel, lors d'une transmission de données, une balise (S) est transmise additionnellement, en tant qu'information d'identification ou au lieu d'une information d'identification d'autres paquets de données, pour signaler une systématique dans la suite d'informations d'identification successives (PDU-Nr.) de paquets de données (PDU).

11. Procédé selon une revendication précédente, selon lequel l'information d'identification (PDU-Nr.) pour un paquet de données actuel (PDU) est reprise d'un ou de plusieurs paquets de données préalablement reçus avec cette information d'identification en tant qu'information supplémentaire.

12. Procédé selon une revendication précédente, selon lequel des informations d'affichage supplémentaires (bit indicateur d'exportation / d'importation) signalent une information d'identification (PDU-Nr.) répartie sur plusieurs paquets de données pour un paquet de données (PDU).

13. Procédé selon l'une des revendications précédentes, selon lequel l'information d'identification (PDU-Nr.) est transmise sous la forme compressée de l'information d'identification à proprement parler (PDU-Nr.) d'un ou de plusieurs paquets de données associés (PDUs).

14. Procédé selon l'une des revendications précédentes, selon lequel il est fait appel à plusieurs parties d'informations et/ou de redondance de l'information d'identification d'un paquet de données (PDU), qui sont transmises dans différents paquets de données (PDUs) ou leurs en-têtes, individuellement et/ou sous forme combinée pour décoder l'information d'identification.

15. Procédé selon une revendication précédente, selon lequel l'information d'identification (PDU-Nr.) est remplacée par des en-têtes entiers ou certaines parties de l'entête.

16. Procédé selon l'une des revendications précédentes, selon lequel plusieurs paquets de données associés (PDU) sont transmis avec une information d'identification (PDU-Nr.) en partie commune sur différents canaux de transmission (V) et/ou voies de transmission spécifiques à un ensemble d'utilisateurs.

17. Procédé selon la revendication 2, selon lequel les informations d'identification (PDU-Nr.) d'une pluralité de paquets de données (PDUs) sont transmises dans un propre paquet de données d'information (Index-PDU).

18. Procédé selon la revendication 17, selon lequel les paquets de données (PDUs) sont transmis dans un ordre identique à celui dans lequel les informations d'identification associées se présentent dans le paquet de données d'information (Index-PDU).

19. Procédé selon l'une des revendications 17 ou 18, selon lequel des paquets de données (PDUs), lors de leur transmission, ne contiennent aucune information d'identification propre (PDU-Nr.).

20. Procédé selon l'une des revendications 17 à 19, selon lequel la transmission de l'information d'identification transmise séparément (PDU-Nr.) est répétée dans le cas d'une transmission erronée ou en retard.

21. Procédé selon l'une des revendications 17 à 20, selon lequel est transmise, en tant qu'information d'identification transmise séparément (PDU-Nr.), une partie seulement de l'information d'identification à proprement parler (PDU-Nr.) du paquet de données (PDU) associé.

22. Procédé selon l'une des revendications 17 à 20, selon lequel l'information d'identification transmise séparément (PDU-Nr.) est transmise sous la forme compressée de l'information d'identification à proprement parler (PDU-Nr.) d'un ou de plusieurs paquets de données associés (PDUs).

23. Système de communication radio comportant au moins deux stations (BS, MS) qui sont conçues pour échanger des paquets de données (PDUs) via une interface radio (V, FACH, BCCH), comportant :
- au moins deux stations (BS, MS) qui sont conçues pour échanger des paquets de données (PDUs) via une interface radio (V, FACH, BCCH),
- des dispositifs de transmission pour transmettre des informations sur des paquets de données (PDUs) lors d'une transmission de données par paquets via l'interface aérienne, une information d'identification (PDU-Nr.) étant transmise, pour chaque paquet de données (PDU), entre les stations (BS, MS) qui communiquent entre elles,
**caractérisé par** au moins un dispositif (X), dans les stations (MS, BS), pour transmettre l'information d'identification (PDU-Nr.) dans le paquet de données (PDU) qui lui est associé et pour transmettre séparément l'information d'identification (PDU-Nr.) et du paquet de données (PDU) associé à l'information d'identification, lequel dispositif transmet l'information d'identification (PDU-Nr.) dans un canal aménagé spécialement à cet effet.
